# EUROPEAN PATENT APPLICATION

(11) **EP 0 737 674 A2**
(43) Date of publication of application: **16.10.1996**
(21) Application number: 96302552.3
(22) Date of filing: 11.04.1996
(51) Int. Cl.: C07C 319/00, C07C 321/00, C10M 135/04

(54) **Process for the preparation of sulfurized olefins**

(30) Priority: 12.04.1995 US 420465
(71) Applicant: ETHYL CORPORATION, Richmond Virginia 23219 (US)
(72) Inventor: Kadkhodayan, Abbas, Collinsville, IL 62234 (US)
(74) Representative: Cropp, John Anthony David

(57) **Abstract**

Processes for the preparation of sulfurized olefins comprising (a) combining together an olefin with a sulfur halide to form an adduct; and (b) adding the adduct of (a) to an alkaline solution of a sulfur source at a selected viscosity-dependent rate to provide the sulfurized olefin with a predetermined viscosity. The sulfurized olefins can be prepared by the present methods with a substantially reduced halogen content. The sulfurized olefins can be used to improve the lubricity of lubricating oils.

## Description

### Field of the Invention

The present invention relates to processes for preparing sulfurized olefins. More particularly, the present invention relates to processes for preparing sulfurized olefins having a predetermined viscosity and a reduced halogen content.

### Background of the Invention

Sulfurized olefins are well-known oil additives for lubricating and gear oils. Various methods have been disclosed in the prior art for the preparation of sulfurized olefins. *See, e.g.,* Myers, U.S. Patent No. 3,471,404; Papay et al., U.S. Patent No. 4,204,969; Zaweski et al., U.S. Patent No. 4,954,274; Degonia et al., U.S. Patent No. 4,966,720; and British Patent No. 1,308,894.

Prior art methods for preparing sulfurized olefins, including the methods disclosed in the aforementioned patents, generally involve multiple stages. The first stage generally involves the formation of a material, typically referred to as an "adduct", in which an olefin is reacted with a sulfur halide, for example, sulfur monochloride. The adduct is then generally reacted with sulfur to provide the sulfurized olefin. The prior art methods for the preparation of sulfurized olefins, including the methods described in various of the aforementioned patents, suffer from various drawbacks.

In this connection, the quality of a sulfurized olefin is generally measured by various physical properties, including, for example, viscosity, sulfur content, halogen content and copper corrosion test weight loss (CCT). As known to those skilled in the art, copper corrosion test weight loss refers to the weight loss, in milligrams (mg), of a strip of copper which is dipped into the sulfurized olefin for about 3 hours at about 121°C. In certain cases, sulfurized olefins desirably have a low viscosity inasmuch as these tend to have increased solubility in lubricating oils as compared to sulfurized olefins having high viscosities. Degonia et al., U.S. Patent No. 4,966,720 teach that sulfurized olefins having a lower viscosity, for example, 6.0 centistokes (cSt), can be obtained by precooling the sulfur monochloride to 0°C to 10°C and maintaining the temperature of the reaction between the olefin and the sulfur monochloride at that temperature until a majority of the olefin has been combined with the sulfur monochloride. Precooling the sulfur monochloride and maintaining the temperature of the reaction between the olefin and sulfur monochloride below 10°C is disadvantageous in that costly refrigeration equipment is needed, particularly in connection with processes that are conducted on a large scale.

The sulfurized olefins obtained by the methods disclosed in the prior art, including, for example, the methods disclosed in U.S. Patent No. 4,966,720, typically have a chlorine content of greater than about 5,000 ppm. The methods disclosed, for example, in British Patent No. 1,308,894, provide sulfurized olefins having a chlorine content as high as 7,000 ppm. Such high concentrations of chlorine are undesirable due to environmental considerations and contribute also to increased corrosivity of the sulfurized olefin. Previous attempts at developing methods for the preparation of sulfurized olefins with lower chlorine contents have generally resulted in sulfurized olefins having higher viscosities which, as noted above, can have limited solubility in lubricating oils. The prior art methods have resulted also in sulfurized olefins having undesired amounts of sulfur and unacceptable copper corrosion.

Accordingly, new and/or better methods for preparing sulfurized olefins and sulfurized olefins produced thereby are needed. The present invention is directed to this, as well as other, important ends.

### Summary of the Invention

The present invention is directed to a process for the preparation of a sulfurized olefin. The process comprises combining together an olefin with a sulfur halide to form an adduct. The adduct is added to an alkaline solution of a sulfur source at a selected viscosity-dependent rate to provide the sulfurized olefin with a predetermined viscosity.

Another aspect of the invention relates also to a process for the preparation of a sulfurized olefin. The process comprises combining an olefin with a sulfur halide at a temperature of than about 10°C to about 100°C to form an adduct. The adduct is added to an alkaline solution of a sulfur source at a selected viscosity-dependent rate to provide the sulfurized olefin. The sulfurized olefin has a predetermined viscosity and a halogen content of less than about 5,000 ppm.

Yet another aspect of the present invention relates to a sulfurized olefin which is prepared by combining together an olefin with a sulfur halide to form an adduct. The adduct is then added to an alkaline solution of a sulfur source at a selected viscosity-dependent rate to provide the sulfurized olefin with a predetermined viscosity.

Still another aspect of the invention relates to a method for improving the lubricity of a lubricating oil. The method comprises adding to the oil a sulfurized olefin which is prepared by combining together an olefin with a sulfur halide to form an adduct. The adduct is added to an alkaline solution of a sulfur source at a selected viscosity-dependent rate to provide the sulfurized olefin with a predetermined viscosity.

These and other aspects of the invention will become more apparent from the present description and claims.

### Detailed Description of the Invention

As employed above and throughout the disclosure, the following terms, unless otherwise indicated, shall be understood to have the following meanings.

"Olefin" refers to monoethylenically unsaturated aliphatic hydrocarbons. The olefins may be straight- or branched-chain and preferably contain from about 3 to about 6 carbon atoms. Exemplary olefins include, for example, 1-butene, 2-butene, isobutylene, 1-pentene, 2-pentene, 2-methyl-1-butene, 3-methyl-1-butene, 2-methyl-2-butene, hexenes, 2-methyl-2-pentene, and 2-methyl-2-butene and mixtures thereof. Preferred olefins for use in preparing the sulfurized olefins are selected from the group consisting of isobutylene, 2-methyl-1-butene, and 2-methyl-2-butene with isobutylene being especially preferred.

"Adduct" refers to the product which is obtained from the combination of an olefin and a sulfur halide.

'Sulfur source" refers to a compound or a mixture of compounds which contain sulfur and which can be used in connection with the conversion of the adduct to the sulfurized olefin. Exemplary sources of sulfur include, for example, elemental sulfur, hydrogen sulfide (H₂S), sodium hydrosulfide (NaSH), and sodium sulfide (Na₂S) and mixtures thereof.

"Viscosity-dependent rate" refers to the discovery, as described in detail below, that the viscosity of the sulfurized olefins obtained by the present methods is dependent on, and can be adjusted by, the rate at which the adduct is added to the sulfur source. As described in detail below, shorter addition times result in sulfurized olefins having lower viscosities, and longer addition times result in sulfurized olefins having higher viscosities.

"Halogen" or "halide" refers to fluorine, bromine, chlorine or iodine. Preferred halogens include chlorine.

"Lubricating oil" refers to oils of mineral or synthetic origin. Useful synthetic oils include olefin oligomers, such as decene trimer, tetramer and pentamer made by oligomerizing 1-decene using a BF₃ catalyst. Suitable olefin oligomers can be made by using other catalysts, for example, an aluminum alkyl Ziegler catalyst. Suitable olefins from which the synthetic oils are prepared also include 1-olefins of about 6 to about 14 carbon atoms. Exemplary synthetic oils also include alkyl benzenes, for example, didodecylbenzene, alkyl esters of dicarboxylic acids, for example, di-2-ethylhexylsebacate, fatty acid esters of polyols, for example, trimethylolpropane, tripelargonate and complex esters of alkanols, polyols and carboxylic or polycarboxylic acids.

"Lubricating oil formulation" refers to a composition of a lubricating oil and a sulfurized olefin.

The present invention is directed, in part, to processes for the preparation of sulfurized olefins. The processes comprise (a) combining together an olefin with a sulfur halide and (b) adding the adduct formed in step (a) to an alkaline solution of a sulfur source at a selected viscosity-dependent rate to provide the sulfurized olefin with a predetermined viscosity.

The first stage of the process involves combining together an olefin with a sulfur halide. Suitable sulfur halides include, for example, sulfur monobromide, sulfur monochloride, sulfur dibromide and sulfur dichloride and mixtures thereof. Sulfur monochloride is a preferred sulfur halide for use in connection with the processes of the present invention. The olefin and the sulfur halide are combined under conditions which promote reaction of the olefin with the sulfur halide. For example, the olefin can be added to the sulfur halide, the sulfur halide can be added to the olefin, and/or the olefin and sulfur halide can be introduced substantially simultaneously into an appropriate reaction vessel. Preferably, the olefin, which is in the form of a liquid or a gas, is added to the sulfur halide.

The initial temperatures of the olefin and the sulfur halide and the temperature at which they are reacted together can vary. Generally, the initial reaction temperature is high enough to promote reaction between the olefin and the sulfur halide, but not so high as to cause decomposition of the olefin, sulfur halide and/or adduct. In preferred embodiments, which involve adding the olefin to the sulfur halide, the sulfur halide is preferably maintained at an initial temperature of greater than about 10°C to about 100°C. The temperature of the mixture of the olefin and sulfur halide is preferably maintained within this range during the addition of the olefin and thereafter. Preferably, the temperature range is about room temperature to about 90°C, with temperatures of greater than about room temperature to about 50°C being more preferred.

The reaction of the olefin with the sulfur halide is exothermic. Accordingly, in embodiments in which the olefin is added to the sulfur halide, the olefin can be added at a controlled rate to maintain the temperature within the desired range. After the addition of the olefin is complete, the progress of the reaction between the olefin and the sulfur halide can be monitored by monitoring the temperature of the reaction. For example, the reaction temperature will begin to fall when the sulfur halide has been substantially completely consumed. If desired, external heat can then be applied to continue the reaction. The time required to complete the reaction between the olefin and the sulfur halide can vary depending upon numerous factors, including, for example, the particular olefin and sulfur halide involved in the reaction, the rate of addition of the olefin to the sulfur halide, the scale of the reaction, and the like. Generally, the time can vary from several minutes up to about 12 hours or more.

The amounts and molar ratios of olefin to sulfur halide involved in the reaction can vary. Preferably, the molar ratio of olefin to sulfur halide is about 1.6:1 to about 2:1, with a ratio of about 1.7:1 to about 1.9:1 being more preferred. Even more preferably, the molar ratio of olefin to sulfur halide is about 1.78:1 to about 1.86:1.

After the reaction between the olefin and the sulfur halide is substantially complete, the adduct formed in the reaction is combined with an alkaline solution of a sulfur source. As discussed hereinbefore in connection with the reaction involving the olefin and the sulfur halide, the adduct and the alkaline solution can be combined together in a variety of ways. Preferably, the adduct is added to the alkaline solution.

In accordance with the present invention, the alkaline solution comprises a solution of a base, for example, an alkali metal hydroxide, such as sodium hydroxide (NaOH) and potassium hydroxide (KOH), an alkali earth metal hydroxide, such as magnesium hydroxide (Mg(OH)₂) and calcium hydroxide (Ca(OH)₂), or a mixture of an alkali metal hydroxide and an alkali earth metal hydroxide. In preferred embodiments, the alkaline solution comprises a 50% solution of an alkali metal hydroxide, with aqueous NaOH being preferred. The concentration of base in the alkaline solution can vary. Preferably, the concentration of base in the alkaline solution provides a molar ratio of base to adduct of about 0.9:1 to about 1.1:1, although the ratio can vary from about 0.8:1 to about 1.2:1.

The alkaline solution further comprises a source of sulfur. The total amount of sulfur in the aqueous alkaline solution can vary. Preferably, the total amount of sulfur present in the alkaline solution is sufficient to provide sulfurized olefins having a sulfur content of more than about 40 wt.%, and more preferably, a sulfur content of about 40 to about 50 wt. %. This can be achieved, for example, by using mixtures of elemental sulfur and NaSH, although other sources of sulfur can be used, either alone or in combination, to provide sulfurized olefins with a desired sulfur content. Such other sources of sulfur would be apparent to one of ordinary skill in the art based on the present disclosure. In preferred embodiments, which involve mixtures of elemental sulfur and NaSH, the elemental sulfur is present in the alkaline solution in an amount to provide a molar ratio of elemental sulfur to adduct of about 0.01:1 to about 0.3:1 and the NaSH is present in the alkaline solution in an amount to provide a molar ratio of NaSH to adduct of about 1.3:1 to about 1.5:1. The NaSH is conveniently used as an about 30 to about 45% aqueous solution.

In preferred embodiments, the alkaline solution further comprises an alcohol. It has been surprisingly and unexpectedly found that when an alcohol having a boiling point of greater than about 85°C is included in the alkaline solution, a sulfurized olefin is obtained having a substantially reduced halogen content. In this connection, it has been found that incorporating into the alkaline solution an alcohol having a boiling point of greater than about 85°C leads to the formation of a sulfurized olefin having a halogen content of less than about 5,000 ppm. Preferably, the sulfurized olefins obtained by the present methods have a halogen content of less than about 3,000 ppm, with sulfurized olefins having a halogen content of less than about 2,000 ppm being preferred. As discussed in detail below, the processes of the present invention can even provide sulfurized olefins having a halogen content of less than about 1,000 ppm.

The particular alcohol which is included in the alkaline solution can vary, provided that it has a boiling point of greater than about 85°C. Exemplify alcohols include, for example, n-propanol and t-butanol and mixtures thereof. In the case of mixtures, the alcohols, for example, n-propanol and t-butanol, can be combined in various amounts and in various ratios. Preferably, the alcoholic mixture comprises, on a weight basis, a majority of n-propanol, with mixtures containing about 85 to about 95% by weight of n-propanol and about 5 to about 15% by weight of t-butanol being preferred.

The amount of alcohol included in the alkaline solution can vary. Preferably, the alcohol is present in an amount of about 40 to about 70 wt.%, based on weight of the adduct that is combined with the alkaline solution.

The alkaline solution may also comprise an amount of added water which is sufficient to form an aqueous alkaline medium. The amount of water added to the alkaline solution can vary. Preferably, the total amount of water present in the reaction medium is, on a weight basis, substantially equivalent to the amount of adduct combined with the alkaline solution.

It may be desirable to add additional materials to the alkaline solution prior to, during, or after the addition of the adduct of the olefin and the sulfur halide. Examples of additional materials include, for example, anti-foaming agents. A variety of suitable anti-foam agents can be employed in the alkaline solution. A particularly suitable anti-foam agent for use in the of the present invention and which is commercially available is anti-foam B (Dow Corning Co., Midland, MI).

In accordance with the present invention, the adduct is added to the alkaline solution at a selected viscosity-dependent rate. It has been surprisingly and unexpectedly found that the viscosity of the resulting sulfurized olefin is dependent upon the rate at which the adduct is added to the alkaline solution. Specifically, it has been surprisingly and unexpectedly found that at higher rates of addition, wherein the time of addition of the adduct to the alkaline solution is decreased, the resulting sulfurized olefin has a decreased viscosity. Conversely, at lower rates of addition, wherein the time of addition of the adduct to the alkaline solution is increased, the resulting sulfurized olefin has an increased viscosity. Accordingly, the processes of the present invention can be manipulated to prepare sulfurized olefins having a predetermined viscosity, as desired. The processes of the present invention can be used to prepare sulfurized olefins having lower viscosities, for example, about 6 centistokes (cSt), by selecting higher rates of addition (shorter addition times). Conversely, the processes of the present invention can be Used to prepare sulfurized olefins having higher viscosities, for example, more than about 25 cSt, by selecting lower rates of addition (longer addition times). It is generally desirable to select higher rates of addition (shorter addition times) to provide sulfurized olefins having lower viscosities. This is because, as noted above, sulfurized olefins having lower viscosities generally possess improved solubility in lubricating oils. Accordingly, the viscosity-dependent rate is preferably selected to provide sulfurized olefins having viscosities of less than about 25 cSt. More preferably, the viscosity dependent rate is selected to prepare sulfurized olefins having a viscosity of about 20 cSt. Even more preferably, the viscosity dependent rate is selected to prepare sulfurized olefins having a viscosity of about 6 to about 16 cSt. All the viscosity measurements are at 100°C.

As noted above, the adduct can be formed at a range of temperatures, for example, about 10°C to about 100°C. It has been found that adducts formed at lower temperatures generally possess lower viscosities, and adducts formed at higher temperatures possess higher viscosities. Regardless of the viscosity of the adduct, the properties of the sulfurized olefins, including, for example, the viscosity, can nevertheless be selected as desired, based on the rate at which the adduct is added to the alkaline solution of the sulfur source. For example, sulfurized olefins having lower viscosities can be prepared from adducts having, for example, higher viscosities, by selecting higher rates of addition (shorter addition times) of the adduct to the alkaline solution. Conversely, sulfurized olefins having higher viscosities can be prepared from adducts having, for example, lower viscosities by selecting lower rates of addition (longer addition times) of the adduct to the alkaline solution. Accordingly, the present methods provide significant flexibility in the preparation of sulfurized olefins having the desired physical properties. Such flexibility in methods for preparing sulfurized olefins has been unavailable heretofore.

It has been found that regulating the amount of the adduct which is added to the alkaline solution, based on the total of the amount of the adduct to be added, per unit time, is a simple and effective means for measuring the viscosity-dependent rate. Thus, the viscosity-dependent rate can be expressed in terms of the percent of the adduct (based on the total adduct) which is added to the alkaline solution per minute (min). In preferred embodiments of the present invention, the viscosity-dependent rate is less than about 0.4 wt.% of adduct/min to about 4 wt.% of adduct/min or more. More preferably, the viscosity-dependent rate is about 0.4 wt.% of adduct/min to about 3 wt. % of adduct/min, with a viscosity-dependent rate of about 0.7 wt% of adduct/min to about 2 wt.% of adduct/min being even more preferred.

The temperature of the alkaline solution can be adjusted, as desired, prior to the addition of the adduct. For example, the alkaline solution can be at about room temperature prior to the addition of the adduct. In certain preferred embodiments, the alkaline solution is heated to a temperature of greater than about room temperature prior to the addition of the adduct. Preferably, the alkaline solution is heated to about 40°C to about 90°C. During the addition of the adduct, the temperature of the alkaline solution can vary, with temperatures of about 40°C to about the reflux temperature being preferred.

After the addition of the adduct to the alkaline solution is completed, the sulfurized olefin can be isolated, as described more fully hereinafter. Thus, it is unnecessary to cause further reaction among the components of the reaction mixture to obtain the sulfurized olefin in an acceptable yield and having a desirable viscosity and/or halogen content. As noted above, the sulfurized olefins can be obtained by the methods described herein with a halogen content of less than about 5,000 ppm, with a halogen content of less than about 3,000 ppm being preferred and a halogen content of less than about 2,000 ppm being more preferred. It has been found that, in certain particularly preferred embodiments of the present invention, sulfurized olefins having a halogen content of even less than about 1,000 ppm can be obtained by the methods described herein. In this connection, after addition of the adduct to the alkaline solution, the reaction mixture can be maintained at room temperature, or heated to an elevated temperature, for a period of time to cause further reaction among the components of the reaction mixture. Preferably, the reaction mixture is maintained at about room temperature or heated to a temperature of greater than about room temperature to about the reflux temperature of the reaction mixture. More preferably, the reaction mixture is heated to a temperature of about 65°C to about 90°C for several minutes to about 4 hours, after addition of the adduct to the alkaline solution. This additional reaction time, during which the reaction mixture is maintained at about room temperature or heated to an elevated temperature, leads to the formation of sulfurized olefins having a halogen content of less than about 1,000 ppm. Sulfurized olefins having such low halogen contents have been heretofore unknown.

After the addition of the adduct to the alkaline solution is completed, or after causing further reaction among the components of the reaction mixture, the sulfurized olefin can be isolated using various techniques which would be apparent to one skilled in the art based on the present disclosure. For example, the sulfurized olefin can be isolated by first removing the alcohol *in vacuo.* The temperature of the reaction mixture during the removal of the alcohol can vary and depends upon, for example, the particular alcohol(s) involved in the reaction and the pressure at which the alcohol is removed. Preferably, the temperature of the reaction mixture during removal of the alcohol is greater than about room temperature to about the reflux temperature. Preferably, the temperature of the reaction mixture during the alcohol removal is from about 65°C to about 100°C.

The pressure of the reaction mixture during the alcohol removal can vary and depends upon, for example, the particular alcohol(s) involved in the reaction and the temperature at which the reaction mixture is maintained during the alcohol removal. For example, the pressure may range from about atmospheric pressure to about a subatmospheric pressure, for example, about 20 to about 23 inches of mercury (Hg). Preferably, the pressure is reduced to about 23 inches of Hg to effect substantially complete removal of the alcohol. The vacuum is then released and water is added, with agitation, to the concentrated reaction mixture. The amount of water which is added to the concentrated mixture can vary and is preferably about 60 to about 100% by weight, based on the weight of the adduct which was originally added to the alkaline solution.

The diluted reaction mixture is agitated for a period of time, for example, about 10 to about 30 minutes, at which time the agitation is stopped. The aqueous phase is removed, for example, by decantation, and the organic phase can be further concentrated *in vacuo.* Preferably, the organic phase is heated to an elevated temperature, for example, about 100 to about 110°C, and is subjected to a reduced pressure of about 25 to about 28 inches of Hg during the additional concentration.

After concentration of the organic phase at an elevated temperature and a reduced pressure for about several minutes to about 30 minutes, the sulfurized olefin can be isolated using conventional methods, for example, filtration, centrifugation, and the like.

The sulfurized olefins which are prepared by the present methods possess desirable copper corrosion properties. Preferably, the present sulfurized olefins possess a corrosion of about 10 to about 100 mg per 100 mL of sample.

As indicated above, the sulfurized olefins of the present invention are useful in various lubricating oil formulations, including gear applications. In preferred form, the sulfurized olefin is added, for example, to a mineral oil or a hydrotreated base stock oil, in an amount sufficient to improve the extreme pressure (EP) properties of the lubricant. Preferably, the sulfurized olefin is added to the oil in an amount of from about 0.1 to about 10 wt.%, based on the weight of the oil.

As will be apparent to one skilled in the art, the present sulfurized olefins are useful in lubricating oil formulations, alone or in combination with additional additives. For example, the lubricating oil formulations can further comprise corrosion inhibitors for ferrous and non-ferrous metals, including tetrapropenyl succinic acid and bis(2,5-alkyldithia)-1,3,4-thiadiazoles. Anti-wear additives which can be included in the lubricating oil formulations include alkyl and aryl phosphonates, phosphites, thiophosphates, dithiophosphates, phosphoric acids, zinc dialkyl or diaryl dithiophosphates, chlorinated hydrocarbons and sulfurized fatty esters and amines. Antioxidants can be included in the lubricating oil formulations including, for example, hindered phenols. In addition, other EP compounds can be included in the lubricating oil formulations.

The present invention is further described in the following examples. These examples are for illustrative purposes only, and are not to be construed as limiting the appended claims. All of the examples are actual examples.

### EXAMPLES

The following examples describe the preparation of the adduct.

### Example 1A

Liquid sulfur monochloride (700 g) was introduced into a reaction flask equipped with a stirrer, thermometer, condenser maintained at 5°C and a sub-surface gas sparger. Gaseous isobutylene (530 g) was bubbled into the sulfur monochloride via the sub-surface gas sparger. During the addition of isobutylene, the temperature of the reaction mixture rose to 50°C. Evolving HCl was removed during the reaction by alkaline scrubbing. The adduct was obtained as a clear amber oil having a specific gravity of 1.190 ± 0.05 at 15.6°C.

### Example 1B

Example 1A was repeated except that the reaction temperature was maintained at about room temperature. The adduct was obtained as a clear orange oil having a specific gravity of 1.183 ± 0.05 at 15.6°C.

### Example 1C

Example 1A was repeated except that the sulfur monochloride was cooled to 5°C prior to the isobutylene addition. The temperature of the reaction mixture was maintained at 5°C until about 75% of the isobutylene was added, at which time the temperature of the reaction mixture rose to 20°C. The temperature of the reaction mixture was maintained at 20°C. ± 3°C during the remainder of the isobutylene addition.

The following examples describe the preparation of sulfurized olefins within the scope of the present invention.

### Example 2A

Into a reaction flask were introduced water (175 g), elemental sulfur (3.6 g), antifoam B (about 0.5 g), n-propanol (325 g), 50% aqueous sodium hydroxide (135.36 g) and 36% aqueous sodium hydrosulfide (409.95 g). The mixture was stirred at about 700 rpm and heated to about 50°C under a nitrogen atmosphere. The adduct (500 g) which was in Example 1A was added subsurface over a one hour period. The temperature of the reaction mixture gradually increased to about 90°C during the addition of the adduct. Upon completion of the adduct addition, the n-propanol was removed by heating the reaction mixture to 100°C under atmospheric pressure. The pressure was reduced to 23 inches of mercury (Hg) and the reaction mixture was cooled to about 70°C to effect substantially complete removal of the n-propanol and a majority of the water. To the resulting stirred product was added water (300 g). Stirring was stopped after about 10 minutes and the reaction mixture was permitted to settle for about 10 minutes. The lower aqueous layer was separated and the organic layer was concentrated *in vacuo* (28 inches Hg) at 100°C for 10 minutes. The organic layer was filtered through a bed of diatomaceous earth to provide sulfurized isobutylene as a clear yellow oil. The sulfurized isobutylene analyzed as follows: viscosity of 6.0 to 9.0 cSt at 100°C; sulfur content of 44 to 48 wt.%; chlorine content of less than 2000 ppm; and a copper corrosion test weight loss (CCT) of 25 to 50 mg per 100 ml of sample.

### Example 2B

Example 2A was repeated except that after the addition of the adduct, the reaction mixture was heated to reflux temperature (about 90°C) for about 4 hours. The resulting sulfurized isobutylene was analyzed as follows: viscosity of 7.0 to 12.0 cSt at 100°C; sulfur content of 44 to 48 wt.%; CCT of 10 to 40 mg per 100 ml of sample; and chlorine content of less than 1,000 ppm.

### Example 2C

Example 2A was repeated expect that the basic alcoholic mixture was heated to reflux prior to the addition of the adduct. The reaction mixture was maintained at the reflux temperature during the addition of the adduct. The resulting sulfurized isobutylene analyzed as follows: viscosity of 6.0 to 8.0 cSt at 100°C; sulfur content of 44 to 48 wt.%; chlorine content of less than 2,000 ppm; and CCT of 50 to 100 mg per 100 ml of sample.

### Example 2D

Example 2A was repeated except that the basic alcoholic mixture was heated to reflux (88° to 90°C) for about 1 hour prior to the addition of the adduct. The resulting sulfurized isobutylene analyzed as follows: viscosity of 6.0 to 8.0 cSt at 100°C; sulfur content of 44 to 48 wt.%; chlorine content of less than 2,000 ppm; and CCT of about 50 to about 100 mg per 100 ml of sample.

### Example 2E

Example 2A was repeated except that, prior to the addition of the adduct, the basic alcoholic mixture was heated to 50°C. The alcoholic mixture was maintained at 50°C during the addition of the adduct which was added subsurface over a 1 hour period. The resulting sulfurized isobutylene analyzed as follows: viscosity of 7.0 to 12.0 cSt and 100°C; sulfur content of 44 to 48 wt.%; chlorine content of less than 2,000 ppm; and CCT of 25 to 50 mg per 100 ml of sample.

### Example 2F

Example 2E was repeated except that the adduct addition time was increased to about 2 hours. The resulting sulfurized isobutylene had the same analysis as Example 2E except that the viscosity increased to 8.0 to 10.0 cSt at 100°C.

### Example 2G

Example 2E was repeated except that the adduct addition time was increased to about 4 hours and the reaction mixture was heated to reflux for about 2 hours after the adduct addition was completed. The resulting sulfurized isobutylene had the same analysis as Example 2A except that the viscosity increased to 10.0 to 16.0 cSt at 100°C.

### Example 3

The following example is directed to an analysis of various sulfurized olefins which are made according to the methods of the present invention.

**TABLE I**

| Sample No. | Visc. (cSt) at 100°C | % Adduct added/min | Addition Time (min) | Percent Sulfur | Percent Chlorine |
|---|---|---|---|---|---|
| 1 | 6.23 | 1.66 | 60 | 45.5 | 0.17 |
| 2 | 6.56 | 1.33 | 75 | 45.1 | 0.16 |
| 3 | 6.91 | 1.11 | 90 | 45.2 | 0.18 |
| 4 | 7.33 | 0.83 | 120 | 45.0 | 0.18 |
| 5 | 9.27 | 0.74 | 135 | 45.4 | 0.17 |
| 6 | 16.25 | 0.42 | 240 | 44.9 | 0.09 |

Inspection of the analysis results tabulated above reveals that shorter adduct addition times provide sulfurized olefins having lower viscosities, and longer adduct addition times provide sulfurized olefins having higher viscosities. Inspection of the tabulated results indicates also that longer addition times provide sulfurized olefins having reduced halogen (chlorine) content.

The disclosures of each patent, patent application and publication cited or described in this document are hereby incorporated by reference, in their entirety.

Various modifications of the invention, in addition to those described herein, will be apparent to those skilled in the art from the foregoing description. Such modifications are also intended to fall within the scope of the appended claims.

## Claims

1. A process for the preparation of a sulfurized olefin having a predetermined viscosity comprising:
(a) combining together an olefin with a sulfur halide to form an adduct; and
(b) adding said adduct of step (a) to an alkaline solution of a sulfur source at a rate selected to provide the sulfurized olefin with said predetermined viscosity.

2. A process as claimed in Claim 1 characterised in that said olefin contains about 3 to about 6 carbon atoms.

3. A process as claimed in Claim 2 characterised in that said olefin is selected from the group consisting of isobutylene, 2-methyl-1-butene and 2-methyl-2-butene.

4. A process as claimed in any one of Claims 1 to 3 characterised in that said alkaline solution comprises a base selected from the group consisting of alkali metal hydroxides and alkali earth metal hydroxides.

5. A process as claimed in any one of Claims 1 to 4 characterised in that said alkaline solution comprises an alcoholic solution.

6. A process as claimed in Claim 5 characterised in that the boiling point of said alcohol is greater than about 85°C.

7. A process as claimed in Claim 8 characterised in that said alcohol is selected from the group consisting of n-propanol and t-butanol and mixtures thereof.

8. A process as claimed in any one preceding claim characterised in that said rate of addition of said adduct of step (a) to said alkaline solution is less than about 0.4 wt.% of adduct/min to about 4 wt.% of adduct/min.

9. A process as claimed in any one preceding claim characterised in that the sulfurized olefin has a viscosity of less than about 25 centistokes (cSt).

10. A process as claimed in any one preceding claim characterised in that the sulfurized olefin comprises a halogen content of less than about 5,000 ppm.

11. A process as claimed in any one preceding claim characterised in that said olefin is combined with said sulfur halide at a temperature of greater than about 10°C to about 100°C to form the adduct.

12. A process as claimed in any one preceding claim characterised in that it further comprises:
(c) heating the product of step (b) to an elevated temperature and for a period of time to provide the sulfurized olefin with a halogen content of less than about 1,000 ppm.

13. A method of improving the lubricity of a lubricating oil comprising adding to the oil a sulfurized olefin which is prepared by a process as claimed in any one preceding claim.

14. A lubricating oil formulation comprising from about 90.0 to about 99.9 percent by weight of an oil of lubricating viscosity and from about 0.1 to about 10 percent by weight of a sulfurized olefin obtained by a process as claimed in any one of Claims 1 to 12.
